# EUROPEAN PATENT SPECIFICATION

(11) **EP 2 770 670 B1**
(45) Date of publication and mention of the grant of the patent: **05.07.2017**
(21) Application number: 13305215.9
(22) Date of filing: 26.02.2013
(51) Int. Cl.: H04L 12/26, H04B 3/487, H04B 3/32, H04M 3/30

(54) **Method and device for monitoring the performance of a vectoring group of telecommunication lines**
Verfahren und Vorrichtung zur Überwachung der Leistung einer Vectoring-Gruppe von Telekommunikationsleitungen
Procédé et dispositif pour surveiller la performance d'un groupe de vectorisation de lignes de télécommunication

(43) Date of publication of application: 27.08.2014
(73) Proprietor: ALCATEL LUCENT, 92100 Boulogne-Billancourt (FR)
(72) Inventor: Drooghaag, Benoît, 5000 Namur (BE); Dardenne, Xavier, 5000 Namur (BE)
(74) Representative: ALU Antw Patent Attorneys

(56) References cited:
- WO-A1-2011/065945
- US-B1- 6 970 560

## Description

### Field of the invention

The present invention refers to a method, device and computer program product for monitoring the performance of a vectoring group of telecommunication lines.

### Background

It is known to apply a crosstalk cancellation technique, also referred to as "vectoring" to a group of telecommunication lines such as Digital Subscriber Lines (DSL). Vectoring is described in detail in the ITU-T Recommendation G.993.5. Vectoring allows for cancelling the crosstalk internal to a group of lines (vectoring group) or so called indomain Far-End Crosstalk (FEXT), which is a major limitation to achieve high bitrates over lines that extend within a common cable or binder. Thus, vectoring increases significantly the available bit rate on such lines.

When applying vectoring, the crosstalk caused by at least some of the lines of a vectoring group is measured and depending on results of this measurement, a compensation signal is computed that is used to eliminate the crosstalk caused to a certain line (victim line).

Typically, signal processing related to vectoring is performed in a network side node of the telecommunication lines of a vectoring group, such as an access node, in particular a DSL access multiplexer (DSLAM). Consequently, pre-coding is used in the downstream direction, applying the compensation signal to a signal to be transmitted by the access node to customer premises equipment (CPE) in downstream direction. In upstream direction, the access node may use post-coding by applying the compensation signal to a signal received from the CPE over the telecommunication line.

Measuring the crosstalk between the individual lines of a vectoring group is based on an error tracking mechanism. A receiver connected to the telecommunication line may determine a difference between an expected signal and an actually received signal and transmit a so-called "error-F" packet over the telecommunication line, which error-F packet comprises error information that describes the difference between the received and the expected signal.

When operating a vectoring group, irregular events related to vectoring may occur. For example, a telecommunication line could suddenly leave the vectoring group without following a leaving procedure specified in the standards related to vectoring. Such type of irregular event is also referred to as Disorderly Leaving Event (DLE). Disorderly leaving events may occur, e. g. when an end user disconnects the CPE including a DSL modem from the power grid or if there are electrical connection problems in the telecommunication line. If a line that causes crosstalk to other lines in a comparatively large extent disorderly leaves the vectoring group then the currently used crosstalk estimates and the corresponding compensation signals may under certain circumstances not be sufficiently correct so that the crosstalk cannot be cancelled anymore and data transmissions on the remaining lines of the vectoring group could be disturbed.

A further type of irregular event related to vectoring is the corruption or the loss of an error-F packet. If one or more of the error-F packets are corrupted or lost during their transmission over the telecommunication line, the crosstalk coefficients used for calculating the compensation signal may be wrongly estimated and crosstalk cancelling could not be performed correctly anymore, leading to an increase of transmission errors on at least one telecommunication line of the vectoring group.

In US 6,970,560 B1 a method for impairment diagnosis in communication systems is disclosed. This method includes applying a Bayesian Belief Network (BBN) defining a probabilistic case-effect relationship.

The published patent application WO 2011/065945 A1 discloses a method and apparatus for detection of wiring defects in a digital subscriber line.

### Summary

In certain situations, in particular when the network elements to which the lines of the vectoring group are connected are not configured correctly, transmission problems including the above-mentioned irregular events related to vectoring may occur very frequently. In such a situation, it is difficult to find out whether transmission problems on a victim line are caused by the irregular event or whether they have different reasons not related to vectoring.

Thus, the object of the present invention is to provide a method and device for monitoring the performance of the vectoring group that allows for identifying or eliminating the irregular events related to vectoring as a cause of transmission problems of a certain victim line of a vectoring group.

In order to provide a solution to this object, a method according to claim 1, a device according to claim 12, a monitoring station according to claim 14 as well as a computer program product according to claim 15 are provided.

According to an embodiment, a method for monitoring the performance of a vectoring group of telecommunication lines is provided, the method comprising detecting depending on at least one first parameter that characterizes crosstalk caused by a disturbing line of the vectoring group to a victim line of the vectoring group that an irregular event related to vectoring has occurred at an instant of time; deciding on whether or not a transmission performance of the victim line decreases within a time interval, the time interval including the instant of time; and determining depending on the deciding on whether or not the performance decrease of the victim line is caused by the irregular event.

By monitoring the transmission performance of the victim line during the time interval that includes the instant of time of the occurrence of the irregular event, it could be observed that the occurrence of the irregular event and transmission performance decreases are correlated with each other in the time domain. If the irregular event and the performance decrease correlate with each other then it may be concluded that the performance decrease on the victim line is due to the irregular event. If it turns out that the considered victim line has performance decreases from time to time but no correlation between the irregular event and the performance decreases can be detected then it may be concluded that the performance decreases have other causes than the irregular event, which are most probably not related to vectoring. Thus, the method allows to check whether transmission performance problems are related to vectoring or not and therefore helps to find a root cause of the transmission performance problems quickly.

In an embodiment, the irregular event is detected when the at least one first parameter reaches a value that indicates that the disturbing line is out of service. The value may be e.g. a special out-of range value. The first parameter reaches that value typically if a disorderly leaving event occurs on the line to which the parameter belongs.

In another embodiment, the irregular event is detected when an absolute value of a slew rate of said at least one parameter is greater than or equal to a slew rate threshold. In particular, loss or corruption of error-F packets may lead to a wrong estimation of the crosstalk and may therefore lead to an increase of the first parameter. In a preferred embodiment, the irregular event is detected if the absolute value of the slew rate of the first parameter of all disturbing lines considered by the method is greater than or equal to the slew rate threshold. In another embodiment, the slew rate of the first parameter related to at least one line is considered, i.e. not all lines need necessarily to be considered. In an embodiment the original value of the slew rate is considered instead of the absolute value of the slew rate. In this embodiment, a sudden increase of the at least one first parameter is detected as an irregular event, whereas a decrease of the parameter is not detected as an irregular event.

In an embodiment, the at least one first parameter includes a measured crosstalk coefficient related to cross talk between one disturbing line and the victim line and/or a list of the most dominant disturbing lines related to the victim line with the respective crosstalk magnitude. The crosstalk coefficient and/or the entries of the list of dominant disturbers can be measured by a network element connected to the telecommunication lines, in particular by an access node (e.g. a DSLAM) to which the lines of the vectoring group are connected. In a preferred embodiment the coefficient may be averaged over frequency. However, the present invention can also be applied in connection with a frequency dependent representation of the crosstalk coefficient or entry of the list of dominant disturbers with their magnitude.

In an embodiment, the deciding on whether or not the transmission performance of the victim line decreases depends on a second parameter that characterizes the transmission quality, in particular the transmission performance, of the victim line.

In a preferred embodiment, the second parameter comprises a minimum or average error-free throughput, an attainable bit rate and/or a noise margin.

In an embodiment, the second parameter characterizes a rate of transmission errors of the victim line.

Preferably, in an embodiment, the at least one second parameter is a rate of forward error corrections, a rate of coding violations and/or a rate of the occurrence of errored seconds. Any combination of these parameters can be applied. The mentioned rates can be determined by polling counters maintained by network elements connected to the lines, in particular by an access node to which the lines of the vectoring group are connected.

In an embodiment, the deciding on whether or not the transmission performance of the victim line decreases depends on whether or not first modem circuitry and second modem circuitry connected to opposite ends of the victim line have resynchronized with each other within the time interval.

In addition, the method may comprise checking whether or not a third parameter that characterizes transmission characteristics of the victim line that are independent of crosstalk remain at least essentially constant during the time interval. Preferably, the determining whether the performance decrease of the victim line is caused by the irregular event depends on said checking.

In a preferred embodiment, the checking depends on an attenuation of the victim line and/or an output power applied by a transmitter of the first or second modem circuitry connected to the victim line.

According to another embodiment of the present invention, a device for monitoring the performance of a vectoring group of telecommunication lines, the device being operable for detecting depending on at least one first parameter that characterizes crosstalk caused by a disturbing line of the vectoring group to a victim line of the vectoring group that an irregular event related to vectoring has occurred at an instant of time; deciding on whether or not a transmission performance of the victim line decreases within a time interval, the time interval including the instant of time; and determining depending on the deciding on whether or not the performance decrease of the victim line is caused by the irregular event.

In an embodiment, the device is operable, preferably programmed, for executing a method according to the invention, embodiments of which method being described herein.

According to yet another embodiment of the present invention, a monitoring station for monitoring the performance of a vectoring group of telecommunication lines, wherein the monitoring station comprises an above-mentioned device for monitoring the performance of a vectoring group of telecommunication lines.

According to still another embodiment of the present invention, a computer program product, preferably a computer readable storage medium, the computer program product comprising a computer program that is programmed for executing a method according to the invention. Embodiments of this method are described herein. The storage medium may comprise magnetic storage (e.g. disks or tapes) or optical storage (e.g. disks) as well as semiconductor storage (e.g. RAM, ROM, Flash-Memory, etc.). Moreover, the computer program may be provided for downloads over a network such as the Internet.

### Brief description of the figures

Exemplary embodiments and further advantages of the present invention are shown in the Figures and described in detail hereinafter.
- Figure 1: shows a communication network according to an embodiment of the invention;
- Figure 2: shows a schematic diagram of signal processing performed for vectoring;
- Figure 3: shows a flow-chart of a method for monitoring the performance of a vectoring group of the network shown in Figure 1;
- Figure 4: shows values of crosstalk coefficients averaged over frequency; and
- Figure 5: shows parameters that characterize the transmission performance of a victim telecommunication line over time.

### Description of the embodiments

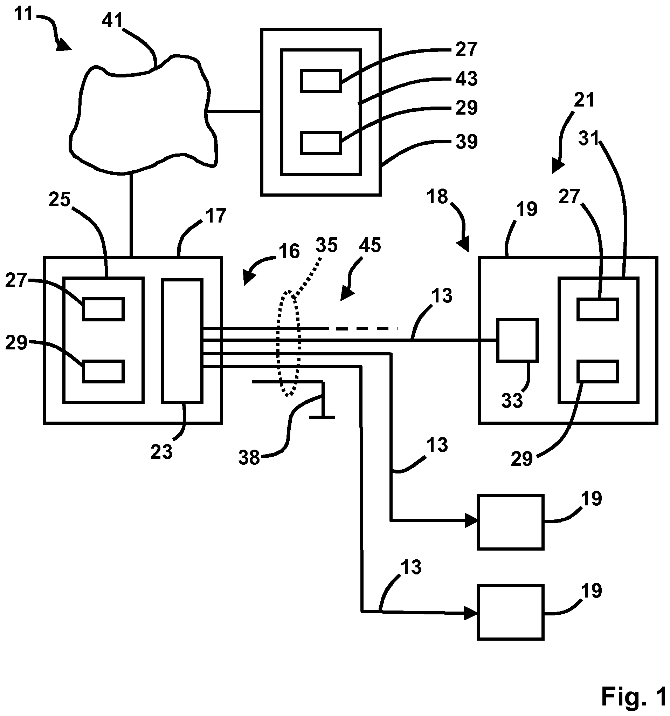

Figure 1 shows a communication network 11 comprising telecommunication lines 13, at least one telecommunication line 13 having a pair of electrical conductors. A first end 16 of the line 13 is connected to a network side termination node of the network 11, further referred to as access node 17, and a second end 18 of the line 13 is connected to a terminal side termination node 19 of the network 11. The terminal side termination node 19 may be part of customer premises equipment (CPE 21) of the network 11.

In the shown embodiment, the telecommunication line 13 is a Digital Subscriber Line (DSL), such as VDSL2 or the like. Consequently, the access node 17 may be a DSL Access Multiplexer (DSLAM) or another type of DSL access node. The terminal side termination node 19 may be a DSL modem or include a DSL modem.

The access node 17 has first modem circuitry 23 to which the first end 16 of the lines 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least some lines 13 are part of a binder 35 and extend in parallel to each other. The binder 35 may comprise an electrically conductive, preferably metallic, shielding 38 that may be grounded as depicted in Figure 1. Because at least some lines extend in parallel to each other in the binder 35, crosstalk between the lines 13 may occur.

Furthermore, the network 11 may comprise an optional monitoring station 39 connected e. g. via an interconnection network 41 to at least one of the nodes 17, 19 such that the station 39 can communicate with at least one of the nodes 17, 19, preferably the access node 17. The station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server computer, a personal computer, a handheld computer such as a PDA or cell phone, etc.

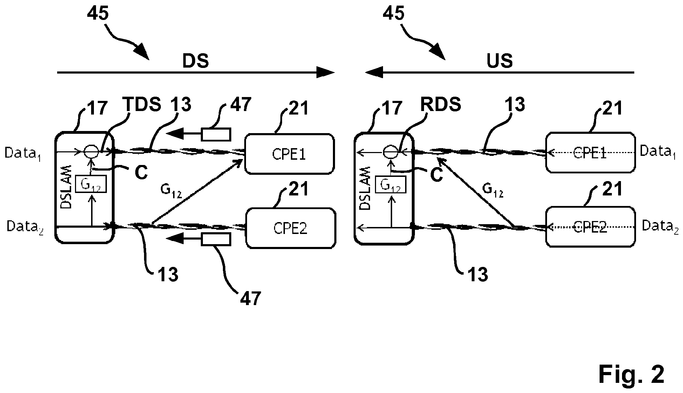

When operating the network 11, vectoring may be performed on at least some of the telecommunication lines 13. The lines 13 which are included into vectoring are also referred to as vectoring group 45. The two diagrams shown in Figure 2 illustrate the basic concept of vectoring for downstream (DS) and upstream (US) transmission in a vectoring group 45 that has only two lines 13. Practical implementations of vectoring typically have vectoring groups 45 with more than two lines.

As can be seen in the diagram on the left hand side of Figure 2, the access node 17 and the terminal side termination node 19 of the CPE21 perform an error tracking procedure in order to determine crosstalk coefficient G₁₂ that describes the crosstalk between the two lines 13. To this end, a receiver of the CPE21 computes an error between an expected signal and an actually received signal and generates and transmits an error-F packet 47 to the access node 17. The error-F packet 47 includes information that describes the error between the expected and the received signal. The access node 17 calculates the crosstalk coefficient G₁₂ depending on the content of the error-F packet 47. The crosstalk coefficient G₁₂ is used to calculate a downstream compensation signal C. A downstream data signal (e. g. the signal labelled with Data₁) is combined with the downstream compensation signal C in order to calculate a signal TDS to be transmitted over the line 13 in downstream direction. By combining the data signal data₁ with the compensation signal C depending on the crosstalk coefficient G₁₂, the influence of the crosstalk originating from the other line 13 is eliminated and the crosstalk therefore cancelled. Because the data signal Data₁ is combined with the downstream compensation signal C before transmitting the combined signal TDS over the line 13, crosstalk cancellation in the downstream direction is based on pre-coding.

The diagram on the right-hand side of Figure 2 shows a vectoring related signal processing in upstream (US) direction. In an embodiment, a receiver at the access node 17 may determine an error signal depending on the difference between an expected signal and an actually received uplink signal RDS in upstream direction in order to calculate the estimated crosstalk coefficient G₁₂ in upstream direction. At least similar to the approach followed in downstream direction, an upstream compensation signal C may be calculated depending on the upstream crosstalk coefficient G₁₂.The signal RDS received by the access node 17 is combined with the upstream compensation signal C in order to obtain an upstream data signal (e.g. signal labelled with Data₁) with the influence of the crosstalk caused by the other line 13 eliminated. By combining the received signal RDS with the upstream compensation signal, the access node 17 cancels the crosstalk in upstream direction. Because the upstream compensation signal C is combined with the data signal RDS after the data signal has been transmitted over the line 13, the crosstalk cancellation approach used in the upstream direction is based on post-coding.

Correct operation of vectoring requires the crosstalk coefficients G₁₂ to be calculated sufficiently accurately and be sufficiently up to date. However, irregular events related to vectoring may occur in the vectoring group 45 that may lead to performing vectoring with one or more wrong or inaccurate crosstalk coefficients G₁₂. Using wrong or inaccurate crosstalk coefficients G₁₂ may prevent crosstalk cancellation or even disturb a data signal that is not affected by crosstalk at all.

One example of such an irregular event is a disorderly leaving event (DLE), i.e. a sudden and unexpected shutdown of at least one line 13 of the vectoring group 45. A disorderly leaving event may be caused e. g. by a customer that disconnects the CPE 21 from the power grid or a customer performing an analogue telephone conversation over the line 13 without having a POTS splitter correctly installed. A further reason for a disorderly leaving event is improper electrical connection of the telecommunication line 13 with the CPE 21 or the access node 17. When a disorderly leaving event occurs at a line 13 that causes crosstalk to other lines 13, the crosstalk suddenly disappears and the related crosstalk coefficient G₁₂ are still applied leading to a crosstalk cancelling measures related to non-existing crosstalk. After a certain time, access node 17 updates the crosstalk coefficients G₁₂ so that the compensation signal C is calculated correctly again and crosstalk cancellation works again. However, in a time interval between the disorderly leaving event and the instant of time when the access node 17 has corrected the crosstalk coefficient G₁₂ the transmission performance of one or more lines 13 remaining in the vectoring group 45 may be decreased.

Another type of irregular event related to vectoring that may temporarily decrease the performance of at least one line 13 of the vectoring group 45 is the loss or the corruption of at least one error-F packet 47. If at least one error-F packet 47 is lost or corrupted, the access node 17 cannot calculate the crosstalk coefficient G₁₂ correctly anymore. As a consequence, the compensation signal C is not calculated or wrongly calculated leading to incorrect crosstalk cancellation. Incorrect crosstalk cancellation has the effect that crosstalk is not eliminated in a data signal transmitted over at least one line 13 or that the compensation signal C is supplied to a line 13 that is not subject to crosstalk. Therefore, incorrect crosstalk cancellation decreases the performance of the affected lines 13 until the access node 17 has updated the related crosstalk coefficients G₁₂ to a correct and up to date value.

In some situations during the operation of the network 11, in particular of the vectoring group 45, performance problems and transmission errors may occur frequently and it is difficult to find out whether the performance problems are related to vectoring or not. In order to automatically determine whether temporary performance decreases on one or more lines 13 are caused by an irregular event related to vectoring, in an embodiment, at least one of the controllers 25, 31 or 43 is arranged for executing a method for monitoring the performance of the vectoring group 45. To this end, a computer program may be provided that is programmed such that at least one of the controllers 25, 31, 43 executes the method when running that computer program. In other words, the method may be executed on the access node 17, on the monitoring station 39 or even on the terminal side termination node 19. When executing on the monitoring station 39, the method may be implemented as part of a Line troubleshooting function of a network analyser running on the monitoring station 39. In another embodiment, the method is executed on a different node of the network 11. The computer program may be stored on at least one storage element 29. In addition, the computer program may be stored on any type of data storage medium, such as magnetic or optical disc or semiconductor storage media. Furthermore, the program can be provided by a server for transmission over a network, preferably the Internet.

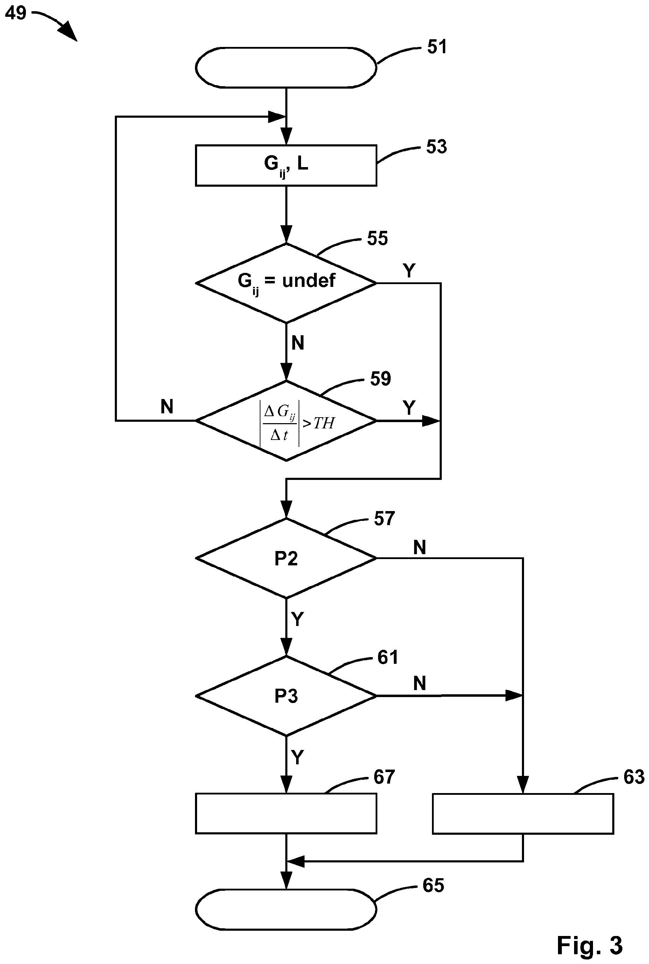

A flowchart of such a method 49 is shown in Figure 3. After a start 51 of the method 49, a step 53 is executed that fetches at least some crosstalk coefficients Gᵢⱼ of the vectoring group 45. In one embodiment, crosstalk coefficients Gᵢⱼ related to all pairs of lines 13 of the vectoring group 45 are determined. In another embodiment, the crosstalk coefficients Gᵢⱼ related to a certain number of lines 13 that cause the most important proportion of crosstalk to a certain victim line j are calculated. These lines 13 are also referred to as the most dominant disturbers. A list L including the most dominant disturbers and/or the crosstalk coefficient Gᵢⱼ related to crosstalk caused by the most dominant disturbers to the victim line j is also referred to as list of the dominant disturbers. The latter embodiment determining or retrieving the list L of dominant disturbers is particularly well-suited to be used in combination with vectoring systems that perform partial crosstalk cancellation. In the shown embodiment, the crosstalk coefficients Gᵢⱼ, e.g. the entries of the list L of dominant disturbers, comprise a crosstalk magnitude averaged over the whole frequency range of the data signal transmitted over the DSL lines 13. However, the present invention is not limited to embodiments using averaged crosstalk coefficients. In another embodiment, a representation of the crosstalk coefficients Gᵢⱼ is used that describes the frequency dependency of the crosstalk, e.g. in a form of a vector comprising values G_{ijf} of the crosstalk coefficients for different frequencies f or frequency ranges. Generally, step 53 determines a first parameter that characterizes crosstalk by a disturbing line 13 to the victim line j. The crosstalk coefficients Gᵢⱼ and the list L of dominant disturbers or the entries of this list L constitute examples of the first parameter.

In a preferred embodiment, determining the crosstalk coefficients Gᵢⱼ in step 53 comprises retrieving them from the access node 17 using a suitable communication protocol such as the simple network management protocol (SNMP). Step 53 may retrieve the crosstalk coefficients Gᵢⱼ and/or the dominant disturber list L. In case that the method 49 is executed directly on the access node 17, the method 49 may access the crosstalk coefficient Gᵢⱼ directly without using a communication protocol.

The method 49 comprises a branch 55 that checks whether a Disorderly Leaving Event (DLE) has occurred on at least one line 13. To this end, branch 55 checks whether at least one crosstalk coefficient has a special out-of-range value labelled in Figure 3 with "undef". The out-of-range value "undef" indicates that the respective line 13 is not in service any more. If so (Y), an irregular event related to vectoring is detected and the method 49 continues with a step 57.

Otherwise (N), the method 49 executes a branch 59 that checks whether an absolute value of a slew rate |Δ*Gᵢⱼ*/Δ*t*| of at least one crosstalk coefficient Gᵢⱼ, preferably of each crosstalk coefficient Gᵢⱼ retrieved in step 53, is greater than or equal to a slew rate threshold TH. If so (Y) then the method 49 detects a loss or corruption of at least one error-F packet 47 which constitutes a further type of irregular event related to vectoring, and continues with step 57. In other words, if a sudden change of at least one crosstalk coefficient, preferably of all retrieved crosstalk coefficients, is detected, an irregular event related to crosstalk is identified.

In the shown embodiment, the crosstalk coefficients Gᵢⱼ are determined regularly and refer to different discrete instants of time. Therefore, the slew rate may be estimated by calculating the difference ΔGᵢⱼ of two consecutive values of a crosstalk coefficient. This slew rate may therefore be expressed as a difference quotient Δ*Gᵢⱼ*/Δ*t* as shown in Figure 3. However, any other suitable approach for calculating this slew rate may be applied. For example the slew rate may be estimated by considering multiple values of the crosstalk coefficient Gᵢⱼ related to different instances of time and applying an interpolation method to these multiple values.

If step 59 does not detect an irregular event (N), then the method 49 returns to step 53. As can be seen in Figure 3, the method 49 executes the branches 55 and 59 repeatedly until an irregular event is detected. In other embodiments, the order of the steps 53, 55 and 59 within a loop for repeatedly testing whether an irregular event has occurred may be different than in the embodiment shown in Figure 3.

Branch 57 and a further optional branch 61 serve to decide on whether or not transmission performance on the victim line j decreases within a time interval ΔT. The time interval ΔT is selected such that it includes an instant of time t of occurrence of the irregular event identified by the method 49. In a preferred embodiment, the instant of time is at least approximately in the middle of the time interval ΔT.

Branch 57 may decide on whether or not the transmission performance on the victim line j decreases depending on a second parameter P2 that characterizes a quality of transmission of the victim line j. The second parameter P2 may be a rate of events related to transmission errors. Thus, the parameter P2 may include a rate of forward error corrections, a rate of coding violations CV or a rate of the occurrence of errored seconds or severely errored seconds. In an embodiment, branch 57 considers multiple parameters. Preferably, the above-mentioned rates can be measured by retrieving values of respective counters which may be reset periodically. For example, the following counters may be considered: forward error correction counter (in upstream and downstream), coding violation counter (in upstream or downstream), errored seconds counter (in upstream or downstream), several errored seconds counter (in upstream or downstream) and/or low-error-free-throughput-seconds counter (in upstream or downstream direction). Step 57 may check whether there is a peak or an increasing rate of these counters within the time interval ΔT.

In addition, the second parameter P2 may comprise a minimum or average error-free throughput on the victim line, an attainable bit rate on the victim line and/or a noise margin on the victim line. The second parameter P2 may be determined for the upstream and/or the downstream direction. The performance decrease may be detected if the second parameter P2 changes within the time interval ΔT.

Moreover, step 57 may detect the performance decrease if the two modem circuitries 23, 33 connected to the victim line j have resynchronized with each other during the time interval ΔT.

In general, in a concrete embodiment, any suitable combination of decisions criteria described herein may be applied in order to decide on whether there is a performance decrease on the victim line j within the time interval ΔT. In particular any combination of examples of the parameter P2 or the information on whether the modem circuitries 23, 33 have resynchronized with each other during the interval ΔT may be used. For example one single parameter of the above-mentioned exemplary parameters could be considered. In an embodiment, multiple parameters are considered and for each considered parameter the above-described decision on whether the performance decrease is caused by the irregular event may be made leading to multiple decisions. A final decision may be found depending on said multiple decisions. For instance, the final decision may be that the performance decrease is caused by the irregular event if at least a predefined minimum number of decisions, or a majority of them, related to the individual considered parameters are that the performance decrease is caused by the irregular event.

If step 57 detects a performance decrease regarding the data transmission on the victim line j, then (Y) the method 49 continues with branch 61. Otherwise (N) the method continues with a step 63 that determines that any performance problems on the victim line j are not caused by the irregular event related to vectoring. After step 63, the method 49 is terminated in step 65.

Step 61 checks whether a third parameter P3 that characterizes transmission characteristics of the victim line j that are independent of crosstalk from the disturbing lines 13 is at least essentially constant during the time interval ΔT. A parameter is independent of crosstalk if crosstalk has an at most marginal influence on the parameter. If this third parameter P3 remains constant within the interval ΔT (Y) then the method 49 determines in a step 67 that the performance decrease on the victim line 13 is caused by the irregular event. After step 67, the method terminates in step 65. Otherwise (N), the method executes step 63 and concludes that the performance decrease must has another cause than the irregular event related to crosstalk or crosstalk cancelation.

In an exemplary embodiment, the third parameter P3 may comprise an attenuation of the victim line j in upstream and/or in downstream direction and/or an output power applied by transmitters connected to the victim line j (in upstream and/or in downstream direction).

In a preferred embodiment, the method 49 is executed repeatedly in order to continuously monitor the vectoring group 45.

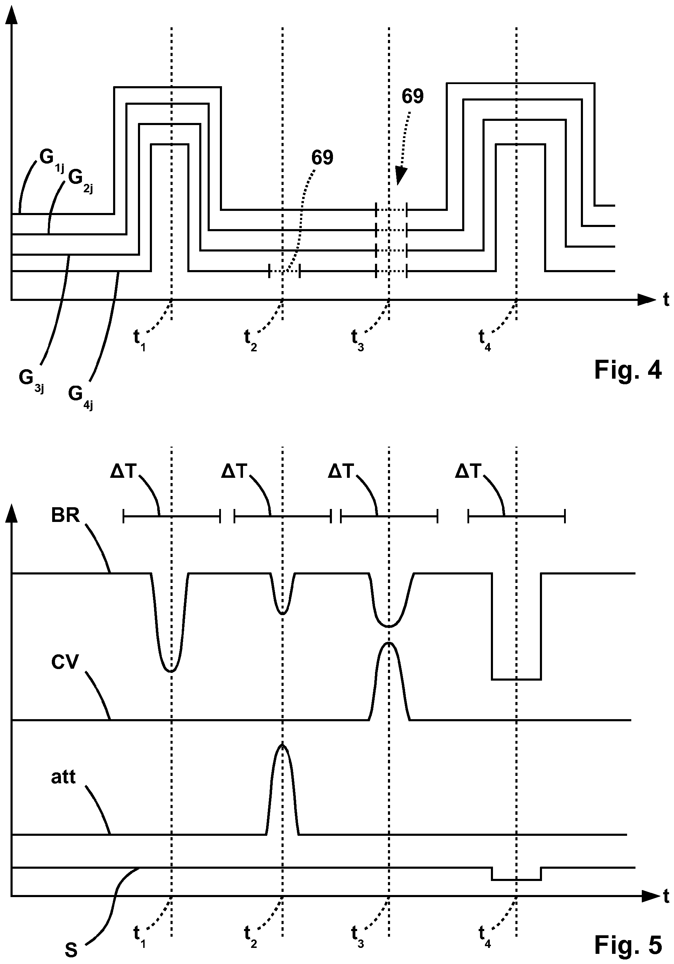

Diagrams shown in Figure 4 and Figure 5 illustrate the behavior of the method 49. These Diagrams have the same time axis. Figure 4 shows the course of crosstalk coefficients G₁ⱼ, G₂ⱼ, G₃ⱼ, G₄ⱼ related to four different disturbing lines 13 and one victim line j. In an instant of time t₁ and in another instant of time t₄ the crosstalk temporarily increases on all shown lines resulting in a comparatively high slew-rate of the crosstalk coefficients. Consequently, branch 59 detects that the slew-rate of all considered crosstalk coefficients Gᵢⱼ is above the slew-rate threshold TH.

In t₂, the crosstalk coefficient G₄ⱼ related to a single line 13 reaches the out-of-range value 69 and branch 55 detects an irregular event.

Furthermore, in t₃, crosstalk coefficients G₁ⱼ, G₂ⱼ, G₃ⱼ, G₄ⱼ of all lines 13 shown in Figure 4 have the out-of-range value 69 and step 55 detects an irregular event again. The instances of time t₁, t₂, t₃ and t₄ are instances of time of occurrence of an irregular event related to crosstalk, i.e. the method 49 has identified irregular events for these instances of time t₁, t₂, t₃, t₄.

Figure 5 shows values of parameters (measurement values or incrementing rate of counters) that describe the transmission performance of the victim line j. In particular, Figure 5 shows the attenuation of the line att, an upstream bit rate BR on the victim line j, an increasing rate of a counter for coding violations CV and an indicator S that indicates whether the two modem circuitries 23, 33 are currently synchronized with each other.

As shown in Figure 5, the performance related parameter related to crosstalk BR decreases during the time interval ΔT around t₁ indicating a performance decrease. However, the attenuation att, which does not depend on crosstalk, remains constant within the time interval ΔT around t₁. Consequently, the method 49, in particular branches 57 and 61 are executed such that step 67 is reached to determine that the performance decrease is caused by the irregular event that occurs at t₁.

In t₂, the attenuation att increases and the bit rate BR decreases. Steps 57 and 61 decide that the performance decrease caused by the increase of the attenuation is not due to the irregular event that happened to occur within a time interval ΔT around t₂. In other words, although there is an irregular event in t₂, any performance problem related to the victim line has nothing to do with the irregular event that happened to occur on one of the disturbing lines during the interval ΔT. Apparently, the performance decrease is caused by a problem in the victim line, i.e. the increase of the attenuation att.

In t₃, step 57 detects a peak in the increasing rate of the coding violation counter CV and concludes that there is a performance decrease on the victim line related to the irregular event. Step 61 detects at the same time (i.e. during the interval ΔT) that the attenuation remains constant. As a consequence, the method executes step 67 and determines that the performance decrease is caused by the irregular event.

Finally, in t₄, step 59 detects an irregular event caused by the loss or corruption of error-F packets 47. At the same time, step 57 detects a performance decrease on the victim line because the victim line has lost synchronization during the time interval ΔT around t₄. The loss of synchronisation leads to a drop of the bit rate BR to zero. Because the attenuation att remains constant during the time interval ΔT around t₄, step 67 is executed after branch 61 and the method 49 decides that the performance decrease (loss of synchronization) in the victim line is caused by the irregular event.

In another embodiment, the method 49 does not include branch 61. In that embodiment, step 67 is executed if step 57 decides that a performance decrease in the victim line j occurs within the time interval ΔT around the instant of time when the irregular event has occurred. Otherwise, step 63 is executed.

To sum up, the method 49 and device described herein allow to correlate the irregular event related to vectoring with performance decreases at the victim line and to decide on whether performance decreases at the victim line are caused by the irregular event related to vectoring or if the performance decrease has different reasons. Therefore, the root cause of performance problems on the victim line j can be determined more easily. In order to improve the confidence of this decision, the optional branch 61 checks whether parameters that are not related to vectoring remain constant in the time interval ΔT around the instant of time t₁, t₂, t₃, t₄ when the irregular event has occurred. When implementing the method 49 as a part of a network analyser and/or line troubleshooting tool, problems on telecommunication lines 13 which are part of a vectoring group 45 can be automatically and efficiently be diagnosed.

## Claims

1. Method (49) for monitoring the performance of a vectoring group (45) of telecommunication lines (13), **characterized in that** the method (49) comprises
- detecting (55, 59) depending on at least one first parameter (Gᵢⱼ, L) that characterizes crosstalk caused by a disturbing line (13) of the vectoring group (45) to a victim line (13) of the vectoring group (45) that an irregular event related to vectoring has occurred at an instant of time (t₁, t₂, t₃, t₄);
- deciding (57) on whether or not a transmission performance of the victim line (13) decreases within a time interval (ΔT), the time interval (ΔT) including the instant of time (t); and
- determining (63, 67) depending on the deciding (57) on whether or not the performance decrease of the victim line (13) is caused by the irregular event.

2. Method (49) according to claim 1, wherein the irregular event is detected when the at least one first parameter (Gᵢⱼ, L) reaches a value (69) that indicates that the disturbing line (13) is out of service.

3. Method (49) according to claim 1 or 2, wherein the irregular event is detected when an absolute value of a slew rate (ΔGᵢⱼ/Δt) of each of said at least one parameter (Gᵢⱼ, L) is greater than or equal to a slew rate threshold (TH).

4. Method (49) according to one of the precedent claims, wherein the at least one first parameter includes a crosstalk coefficient (Gᵢⱼ) related to crosstalk between one disturbing line and the victim line and/or a list (L) of the most dominant disturbing lines (13) related to the victim line (13).

5. Method (49) according to one of the precedent claims, wherein the deciding (57) on whether or not the transmission performance of the victim line (13) decreases depends on a second parameter (P2) that characterizes the transmission quality of the victim line (13).

6. Method (49) according to claim 5, wherein the second parameter (P2) comprises a minimum or average error-free throughput, an attainable bit rate and/or a noise margin.

7. Method (49) according to claim 5, wherein the second parameter (P2) characterizes a rate of transmission errors of the victim line (13).

8. Method (49) according to claim 7, wherein the at least one second parameter (P2) is a rate of forward error corrections, a rate of coding violations (CV), and/or a rate of the occurrence of errored seconds or severely errored seconds.

9. Method (49) according to one of the precedent claims, wherein the deciding (57) on whether or not the transmission performance of the victim line (13) decreases depends on whether or not first modem circuitry (23) and second modem circuitry (33) connected to opposite ends (16, 18) of the victim line (13) have resynchronized with each other within the time interval (ΔT).

10. Method (49) according to one of the precedent claims, wherein the method (49) comprises checking (61) whether or not a third parameter (P3) characterizing transmission characteristics of the victim line (13) that are independent of crosstalk remains at least essentially constant during the time interval (ΔT).

11. Method (49) according to claim 10, wherein the third parameter (P3) is an attenuation (att) of the victim line (13) and/or an output power applied by a transmitter of the first or second modem circuitry (23, 33) connected to the victim line (13).

12. Device (25, 27, 43) for monitoring the performance of a vectoring group (45) of telecommunication lines (13), **characterized in that** the device (25, 27, 43) is operable for
- detecting (55, 59) depending on at least one first parameter (Gᵢⱼ) that characterizes crosstalk caused by a disturbing line (13) of the vectoring group (45) to a victim line (13) of the vectoring group (45) that an irregular event related to vectoring has occurred at an instant of time (t₁, t₂, t₃, t₄);
- deciding (57) on whether or not a transmission performance of the victim line (13) decreases within a time interval (ΔT), the time interval (ΔT) including the instant of time (t); and
- determining (63, 67) depending on the deciding (57) on whether or not the performance decrease of the victim line (13) is caused by the irregular event.

13. Device (25, 27, 43) according to claim 12, wherein the device (25, 27, 43) is operable, preferably programmed, for executing a method (49) according to one of claims 1 to 11.

14. Monitoring station (39) for monitoring the performance of a vectoring group (45) of telecommunication lines (13), wherein the monitoring station (39) comprises a device (25, 27, 43) according to claim 12 or 13.

15. Computer program product, preferably a computer readable storage medium (29), the computer program product comprising a computer program that is programmed for executing a method (49) according to one of claims 1 to 11 when run on a computer (25, 27, 43).

## Patentansprüche

1. Verfahren (49) zur Überwachung der Leistung einer Vectoring-Gruppe (45) von Telekommunikationsleitungen (13), **dadurch gekennzeichnet, dass** das Verfahren (49) Folgendes umfasst:
- Erkennen (55, 59) in Abhängigkeit von mindestens einem ersten Parameter (Gᵢⱼ, L), der Nebensprechen kennzeichnet, das von einer Störleitung (13) der Vectoring-Gruppe (45) in einer Opferleitung (13) der Vectoring-Gruppe (45) ausgelöst wird, dass ein unregelmäßiges Ereignis in Zusammenhang mit Vectoring zu einem Zeitpunkt (t₁, t₂, t₃, t₄) stattgefunden hat;
- Entscheiden (57), ob eine Übertragungsleistung der Opferleitung (13) innerhalb eines Zeitintervalls (ΔT) abnimmt oder nicht, wobei das Zeitintervall (ΔT) den Zeitpunkt (t) beinhaltet; und
- Bestimmen (63, 67) in Abhängigkeit von der Entscheidung (57), ob die Leistungsabnahme der Opferleitung (13) von dem unregelmäßigen Ereignis verursacht wird oder nicht.

2. Verfahren (49) nach Anspruch 1, wobei das unregelmäßige Ereignis erkannt wird, wenn der mindestens eine erste Parameter (Gᵢⱼ, L) einen Wert (69) erreicht, der angibt, dass die Störleitung (13) außer Betrieb ist.

3. Verfahren (49) nach Anspruch 1 oder 2, wobei das unregelmäßige Ereignis erkannt wird, wenn ein Absolutwert einer Änderungsgeschwindigkeit (ΔGᵢⱼ/Δt) von jedem des besagten mindestens einen Parameters (Gᵢⱼ, L) größer oder gleich ist wie ein Grenzwert (TH) der Änderungsgeschwindigkeit.

4. Verfahren (49) nach einem der vorstehenden Ansprüche, wobei der mindestens eine erste Parameter einen Nebensprech-Koeffizienten (Gᵢⱼ) in Zusammenhang mit Nebensprechen zwischen einer Störleitung und der Opferleitung beinhaltet und/oder eine Liste (L) der dominantesten Störleitungen (13) in Zusammenhang mit der Opferleitung (13).

5. Verfahren (49) nach einem der vorstehenden Ansprüche, wobei die Entscheidung (57), ob die Übertragungsleistung der Opferleitung (13) abnimmt oder nicht, von einem zweiten Parameter (P2) abhängt, der die Übertragungsqualität der Opferleitung (13) kennzeichnet.

6. Verfahren (49) nach Anspruch 5, wobei der zweite Parameter (P2) einen minimalen oder durchschnittlichen fehlerfreien Durchsatz, eine erreichbare Bitrate und/oder eine Rauschtoleranz umfasst.

7. Verfahren (49) nach Anspruch 5, wobei der zweite Parameter (P2) eine Rate von Übertragungsfehlern der Opferleitung (13) kennzeichnet.

8. Verfahren (49) nach Anspruch 7, wobei der mindestens eine zweite Parameter (P2) eine Rate von Vorwärtsfehlerkorrekturen, eine Rate von Codierverstößen (CV) und/oder eine Rate des Auftretens von fehlerhaften Sekunden oder stark fehlerhaften Sekunden ist.

9. Verfahren (49) nach einem der vorstehenden Ansprüche, wobei die Entscheidung (57), ob die Übertragungsleistung der Opferleitung (13) abnimmt oder nicht, davon abhängt, ob eine erste Modemschaltung (23) und zweite Modemschaltung (33), die an gegenüberliegende Enden (16, 18) der Opferleitung (13) angeschlossen sind, innerhalb des Zeitintervalls (ΔT) neu miteinander synchronisiert wurden oder nicht.

10. Verfahren (49) nach einem der vorstehenden Ansprüche, wobei das Verfahren (49) das Prüfen (61) umfasst, ob ein dritter Parameter (P3), der die Übertragungsmerkmale der Opferleitung (13) kennzeichnet, die vom Nebensprechen unabhängig sind, während des Zeitintervalls (ΔT) mindestens im Wesentlichen konstant bleibt.

11. Verfahren (49) nach Anspruch 10, wobei der dritte Parameter (P3) eine Dämpfung (att) der Opferleitung (13) und/oder eine Ausgangsleistung ist, die von einem Sender der ersten oder zweiten Modemschaltung (23, 33), die an die Opferleitung (13) angeschlossen ist, angewendet wird.

12. Vorrichtung (25, 27, 43) zur Überwachung der Leistung einer Vectoring-Gruppe (45) von Telekommunikationsleitungen (13), **dadurch gekennzeichnet, dass** die Vorrichtung (25, 27, 43) betriebsfähig ist zum
- Erkennen (55, 59) in Abhängigkeit von mindestens einem ersten Parameter (Gᵢⱼ), der Nebensprechen kennzeichnet, das von einer Störleitung (13) der Vectoring-Gruppe (45) in einer Opferleitung (13) der Vectoring-Gruppe (45) ausgelöst wird, dass ein unregelmäßiges Ereignis in Zusammenhang mit Vectoring zu einem Zeitpunkt (t₁, t₂, t₃, t₄) stattgefunden hat;
- Entscheiden (57), ob eine Übertragungsleistung der Opferleitung (13) innerhalb eines Zeitintervalls (ΔT) abnimmt oder nicht, wobei das Zeitintervall (ΔT) den Zeitpunkt (t) beinhaltet; und
- Bestimmen (63, 67) in Abhängigkeit von der Entscheidung (57), ob die Leistungsabnahme der Opferleitung (13) von dem unregelmäßigen Ereignis verursacht wird oder nicht.

13. Vorrichtung (25, 27, 43) nach Anspruch 12, wobei die Vorrichtung (25, 27, 43) betriebsfähig, vorzugsweise programmiert, ist, um ein Verfahren (49) nach einem der Ansprüche 1 bis 11 auszuführen.

14. Überwachungsstation (39) zur Überwachung der Leistung einer Vectoring-Gruppe (45) von Telekommunikationsleitungen (13), wobei die Überwachungsstation (39) eine Vorrichtung (25, 27, 43) nach Anspruch 12 oder 13 umfasst.

15. Computerprogrammprodukt, vorzugsweise ein computerlesbares Speichermedium (29), wobei das Computerprogrammprodukt ein Computerprogramm umfasst, das zum Ausführen eines Verfahrens (49) nach einem der Ansprüche 1 bis 11 programmiert ist, wenn es auf einem Computer (25, 27, 43) gestartet wird.

## Revendications

1. Procédé (49) de surveillance des performances d'un groupe de vectorisation (45) de lignes de télécommunication (13), **caractérisé en ce que** le procédé (49) comprend les étapes suivantes :
- détecter (55, 59) en fonction d'au moins un premier paramètre (Gᵢⱼ, L) qui caractérise la diaphonie provoquée par une ligne brouilleuse (13) du groupe de vectorisation (45) sur une ligne victime (13) du groupe de vectorisation (45) qu'un évènement anormal relatif à la vectorisation s'est produit à un instant dans le temps (t₁, t₂, t₃, t₄) ;
- décider (57) si des performances de transmission de la ligne victime (13) baissent, ou non, au cours d'un intervalle de temps (ΔT), l'intervalle de temps (ΔT) comprenant l'instant dans le temps (t) ; et
- déterminer (63, 67), en fonction du résultat de la décision (57) si la baisse des performances de la ligne victime (13) est due, ou non, à l'événement anormal.

2. Procédé (49) selon la revendication 1, dans lequel l'événement anormal est détecté lorsque le ou les premiers paramètres (Gᵢⱼ, L) atteignent une valeur (69) qui indique que la ligne brouilleuse (13) est hors service.

3. Procédé (49) selon la revendication 1 ou 2, dans lequel l'événement anormal est détecté lorsque la valeur absolue de la vitesse de montée (ΔGᵢⱼ/Δt) de chacun desdits premiers paramètres (Gᵢⱼ, L) est supérieure ou égale à un seuil de vitesse de montée (TH).

4. Procédé (49) selon l'une des revendications précédentes, dans lequel le ou les premiers paramètres incluent un coefficient de diaphonie (Gᵢⱼ) relatif à la diaphonie entre une ligne brouilleuse et la ligne victime et/ou une liste (L) des lignes brouilleuses (13) dominantes concernant la ligne victime (13).

5. Procédé (49) selon l'une des revendications précédentes, dans lequel la décision (57) concernant le fait que les performances de transmission de la ligne victime (13) baissent, ou non, dépend d'un deuxième paramètre (P2) qui caractérise la qualité de transmission de la ligne victime (13).

6. Procédé (49) selon la revendication 5, dans lequel le deuxième paramètre (P2) comprend un débit sans erreur minimum ou moyen, un débit binaire réalisable et/ou une marge d'immunité au bruit.

7. Procédé (49) selon la revendication 5, dans lequel le deuxième paramètre (P2) caractérise un taux d'erreur de transmission de la ligne victime (13).

8. Procédé (49) selon la revendication 7, dans lequel le ou les deuxièmes paramètres (P2) représentent un taux de correction d'erreur sans voie de retour, un taux de violations de codage (CV) et/ou un taux d'apparition de secondes en erreur ou de secondes en erreur grave.

9. Procédé (49) selon l'une des revendications précédentes, dans lequel le résultat de la décision (57) de savoir si les performances de transmission de la ligne victime (13) baissent, ou non, dépend du fait que le circuit du premier modem (23) et le circuit du deuxième modem (33) connectés aux extrémités opposées (16, 18) de la ligne victime (13) se sont resynchronisés, ou non, l'un avec l'autre au cours de l'intervalle de temps (ΔT).

10. Procédé (49) selon l'une des revendications précédentes, dans lequel le procédé (49) comprend la vérification (61) du fait qu'un troisième paramètre (P3) caractérisant les caractéristiques de transmission de la ligne victime (13) qui sont indépendantes de la diaphonie reste, ou non, essentiellement constant au cours de l'intervalle de temps (ΔT).

11. Procédé (49) selon la revendication 10, dans lequel le troisième paramètre (P3) représente une atténuation (att) de la ligne victime (13) et/ou une puissance de sortie appliquée par un émetteur du circuit du premier ou du deuxième modem (23, 33) connectés à la ligne victime (13).

12. Dispositif (25, 27, 43) destiné à surveiller les performances d'un groupe de vectorisation (45) de lignes de télécommunication (13), **caractérisé en ce que** le dispositif (25, 27, 43) permet de
- détecter (55, 59) en fonction d'au moins un premier paramètre (Gᵢⱼ, L) qui caractérise la diaphonie provoquée par une ligne brouilleuse (13) du groupe de vectorisation (45) sur une ligne victime (13) du groupe de vectorisation (45) qu'un évènement anormal relatif à la vectorisation s'est produit à un instant dans le temps (t₁, t₂, t₃, t₄) ;
- décider (57) si des performances de transmission de la ligne victime (13) baissent, ou non, au cours d'un intervalle de temps (ΔT), l'intervalle de temps (ΔT) comprenant l'instant dans le temps (t) ; et
- déterminer (63, 67), en fonction du résultat de la décision (57) si la baisse des performances de la ligne victime (13) est due, ou non, à l'événement anormal.

13. Dispositif (25, 27, 43) selon la revendication 12, le dispositif (25, 27, 43) permettant, de préférence en étant programmé, d'exécuter un procédé (49) selon l'une des revendications 1 à 11.

14. Station de surveillance (39) destinée à surveiller les performances d'un groupe de vectorisation (45) de lignes de télécommunication (13), la station de surveillance (39) comprenant un dispositif (25, 27, 43) selon la revendication 12 ou 13.

15. Produit-programme informatique, de préférence un support de stockage lisible par un ordinateur (29), le produit-programme informatique comprenant un programme informatique qui est programmé pour exécuter un procédé (49) selon l'une des revendications 1 à 11 lorsqu'il est exécuté sur un ordinateur (25, 27, 43).
